# EUROPEAN PATENT APPLICATION

(11) **EP 0 936 483 A2**
(43) Date of publication of application: **18.08.1999**
(21) Application number: 99300744.2
(22) Date of filing: 02.02.1999
(51) Int. Cl.: G02B 6/293

(54) **Optical router with coherent connecting paths**

(30) Priority: 10.02.1998 US 21508
(71) Applicant: LUCENT TECHNOLOGIES INC., Murray Hill, New Jersey 07974-0636 (US)
(72) Inventor: Dragone, Corrado, Little Silver, New Jersey 07739 (US); Wang, Yan, Norcross, Georgia 30092 (US); Li, Yuan P., Duluth, Georgia 30097 (US)
(74) Representative: Johnston, Kenneth Graham

(57) **Abstract**

An optical demultiplexer [200] and multiplexer [300] are interconnected on a common substrate using waveguides that preserve polarization and have the same length. Such waveguides are referred to as coherent connecting paths, which avoid phase delays and polarization changes experienced by lightwaves propagating over different paths to a common end point. Using coherent connecting paths, a 1xN wave-division multiplexer (WDM) is constructed that avoids multi-path interference; and by arranging adjacent Gaussian passbands to intersect at their -3 dB wavelengths, the overall transmission characteristic of the WDM is virtually flat. An important application of coherent connecting paths is in an add-drop multiplexer (ADM) [800], wherein one or more of the coherent connecting paths [820] include an optical switch [30] for adding and/or dropping individual channels. Significantly, the pass-through channels avoid passband narrowing and the ADM has no intrinsic insertion loss.

## Description

### Technical Field

This invention relates to optical routing devices and, more particularly, to the transmission characteristics of such devices.

### Background of the Invention

The technology of amplifying optical transmission systems with many channel wavelengths is rapidly progressing. Present systems typically carry 16 channels on an optical fiber, and future systems may have more than 64 channels. The wavelengths must be very closely spaced so that all channels can be optically amplified together. A typical channel separation is 100 GHz or about 0.8 nanometers (nm). The present technology has focused on combining these wavelengths (multiplexing) on a single fiber at the input of a chain of optically amplifying repeaters and separating these wavelengths (demultiplexing) at the end of the repeater chain. Future systems will also need provisions for partially altering the traffic at each repeater by routing one or several channels out of the total number to different destinations. This is a challenging problem because the routers should not act as a narrow-band filter for the passed channels, since concatenation of such filters at many repeaters would excessively narrow the channel passbands.

The information superhighway will primarily comprise optical fibers for the foreseeable future because of the enormous bandwidth that each optical fiber provides. For example, an optical fiber exhibits relatively low loss over the wavelength region 820 - 1600 nm. This particular region provides a bandwidth of about 180,000 GHz which means that a single optical fiber can potentially carry 45 billion voice channels (4 kHz each) or 30 million television channels (6 MHz each). And while these numbers represent upper limits that are not practical to attain, they provide a compelling reason for communication carriers to use optical transmission.

However, in order to fully utilize this information superhighway, there needs to be convenient equipment for re-directing (routing) individual optical channels, or groups of channels, at multiple intermediate locations along an optical transmission path. Equipment known as "routers" perform this function and generally comprise multiplexers and demultiplexers. Frequently, optical switches are positioned between a demultiplexer and a multiplexer in order to add and/or remove selected channels.

Because routers are cascaded in large optical networks, the transmission characteristic of each channel that undergoes demultiplexing and multiplexing is narrowed -- a phenomenon that can be readily understood by recognizing that cascading these passive devices is equivalent to multiplying their individual transmission functions together. For example, assuming that the transmission characteristic of one particular channel of a router has a normalized magnitude of 1.0 at the center of its passband and 0.8 at its edges, then the transmission characteristic of that particular channel through two router pairs is still 1.0 at the center, but is now 0.8 x 0.8 = 0.64 at the edges. The resulting passband thus has a more pronounced central peak, which unfortunately reduces the usable bandwidth of each passband.

Techniques are known for making passbands relatively wide and flat. For example, U.S. Patent 5,412,744 achieves wide and flat passbands by coupling adjacent waveguides at the input or at the output of a router. U.S. Patent 5,488,680 discloses a Frequency Routing Device Having a Wide and Substantially Flat Passband by causing adjacent Gaussian passbands to intersect at their -3 dB wavelengths. Additionally, U.S. Patent 5,706,377 achieves wide and flat passbands by installing multiple power splitters in the same router pair. Nevertheless, such router pairs have undesirably high intrinsic loss due to the use of power splitters. Accordingly, it is desirable to design a router pair having minimum intrinsic loss and minimum passband narrowing.

### Summary of the Invention

A novel optical device consists of an optical demultiplexer and an optical multiplexer that are connected in series using coherent connecting paths -- *i.e.,* waveguides that preserve polarization and whose phase delays are equal to each other. The use of coherent connecting paths avoids random multi-path interference, which is caused by lightwaves propagating over different paths to a common end point.

In an illustrative embodiment of the invention, a 1xN wave-division multiplexer (WDM), having coherent connecting paths, is designed with adjacent Gaussian passbands that intersect at their -3 dB wavelengths to provide an overall transmission characteristic that is virtually flat.

The advantages of the present invention are most evident in another illustrative embodiment of the invention. Here, an add-drop multiplexer (ADM) is constructed with optical switches disposed in various of its coherent connecting paths for adding and/or dropping individual channels. Significantly, the pass-through channels avoid passband narrowing and the ADM has no intrinsic insertion loss.

In yet another illustrative embodiment of the invention, a single router functions like a pair of routers by looping back output signals to its input ports. The loopback path includes coherent connecting paths having optical switches. Advantageously, a compact ADM is constructed whose pass-through channels avoid passband narrowing and have no intrinsic loss.

### Brief Description of the Drawing

The invention and its mode of operation will be more clearly understood from the following detailed description when read with the appended drawing in which:
FIG. 1 is a waveguide grating router, illustrating its use as an optical demultiplexer;
FIG. 2 is a waveguide grating router, illustrating its use as an optical multiplexer;
FIG. 3 shows a 2x2 optical switch, which is useful in the present invention;
FIG. 4 shows another 2x2 optical switch that provides double filtering and is useful in the present invention;
FIGS. 5A, 5B show the transmission characteristic the 2x2 optical switch of FIG 3 in its powered and non-powered states, respectively;
FIG. 6A shows a prior art add-drop multiplexer (ADM) in a 16 channel optical transmission system;
FIG. 6B shows the transmission spectrum of several pass-through channels associated with the ADM of FIG. 6A in order to illustrate passband narrowing that occurs when adjacent channel crosstalk is designed to be low;
FIG. 6C shows the transmission characteristic of pass-through channels associated with the ADM of FIG. 6A in order to illustrate multi-path spikes that occur when adjacent channel crosstalk is permitted to be high;
FIG. 7A discloses a pair of routers that are interconnected together by groups of coherent connecting paths in accordance with the invention;
FIG. 7B shows the transmission characteristic of the interconnected routers shown in FIG. 7A;
FIG. 8 shows a pair of routers that are interconnected by coherent connecting paths that include several optical switches to form an add-drop multiplexer in accordance with the invention; and
FIG. 9 shows a single router, which is configured to operate as a router pair, that includes several optical switches to form an add-drop multiplexer in accordance with the invention.

### Detailed Description

The present invention relates to planar waveguides whose construction is generally understood and described in numerous articles and patents. The most advanced and technically developed planar waveguides are doped-silica waveguides fabricated with silicon optical bench (SiOB) technology. A doped-silica waveguide is usually preferred because it has a number of attractive properties including low cost, low insertion loss, low birefringence, stability, and compatibility for coupling to fiber. Further, the processing steps are compatible with those in silicon integrated circuit (IC) technology, which are geared for mass production and are readily known.

Generally, a doped-silica waveguide is formed by initially depositing a base or lower cladding layer of low index silica on a silicon or silica substrate. A layer of doped silica with a high refractive index, *i.e.,* the core layer, is then deposited on top of the lower cladding layer. The core layer is subsequently patterned or sculpted into structures required by the optical circuits using photo-lithographic techniques similar to those used in integrated circuit fabrication. Lastly, a top cladding layer is deposited to cover the patterned waveguide core. This technology is generally described in an article entitled: *Silica-based optical integrated circuits* by Y. P. Li and C. H. Henry at Vol. 143, No. 5, IEE Proceedings on Optoelectronics, pages 263-280 (October 1996), which is hereby incorporated by reference.

This disclosure is divided into three parts. Part I describes the principal components used in the invention. Part II describes a pair of routers having coherent connecting paths; and Part III describes an add-drop multiplexer having coherent connecting paths.

### I. The Principal Components

There are three principal components in the embodiments of the invention: (A) Waveguide Grating Routers; (B) 2x2 Optical Switches; and (C) Add-Drop Multiplexers.

### A. Waveguide Grating Routers

An optical router is a device that "routes" light to a particular destination according to its wavelength (color). A prism provides a good example of an optical router in that an input beam of white light is separated into a continuous spectrum of its color components at the prism's output. Such a prism also illustrates the operation of an optical demultiplexer; although an optical demultiplexer generally routes individual ones of a number of input wavelengths (λ₁, λ₂, ..., λₙ), which are all present on an input waveguide, to various particular output waveguides according to wavelength. Optical demultiplexers may also route groups of input wavelengths to a particular output waveguide. One optical router that has gained widespread popularity is known as a Waveguide Grating Router (WGR), which operates as a demultiplexer in one direction of optical transmission and as a multiplexer in the other. Such a WGR is disclosed in U.S. Patent 5,136,671 and discussed in an article entitled: *Applications of the Integrated Waveguide Grating Router* by B. Glance et al. at Vol. 12 No. 6, Journal of Lightwave Technology, pages 957-962 (June 1994), which are both incorporated by reference.

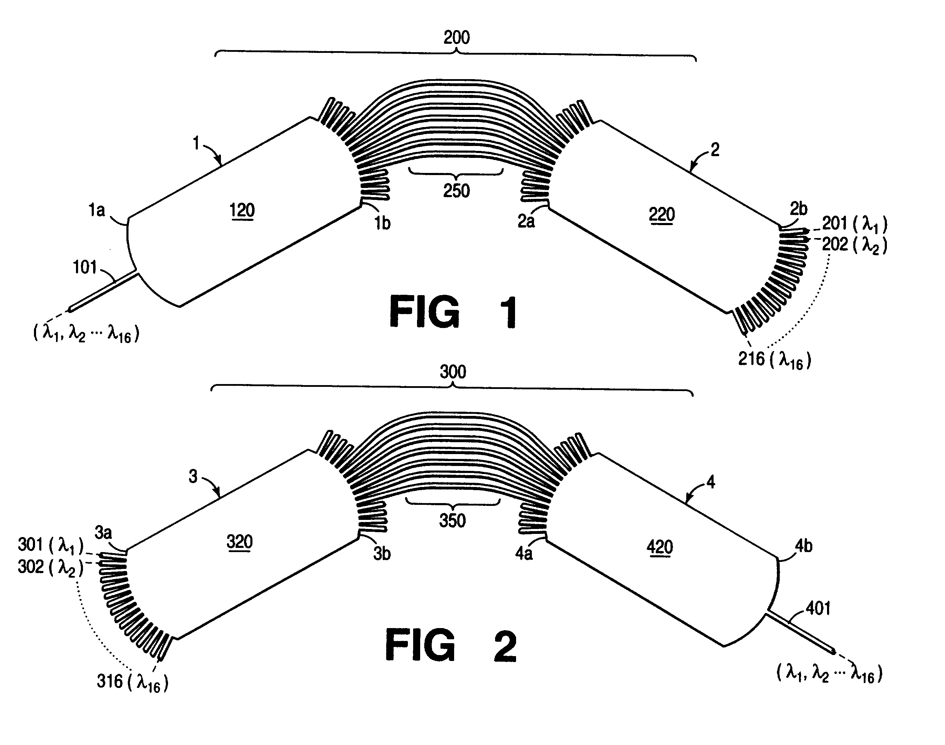

Reference is now made to FIG. 1 for a brief discussion of a router that performs the demultiplexing function in the left-to-right direction of signal propagation. WGR 200, also referred to as a demultiplexer, comprises a pair of star couplers 1, 2 that are interconnected by a diffraction grating 250, which is made from an array of unequal-length optical waveguides. Progressing outwardly across the array, the waveguides become progressively longer in order to provide increasing amounts of phase shift to optical signals traveling in the waveguides.

A star coupler couples the lightwaves from any input port to all of the output ports without wavelength selectivity. It is widely used as a basic crossconnect element in passive optical networks. Ideally, the optical power from any input port splits evenly into all the output ports without power loss, so that each output port receives an equal portion of the input power. Star coupler 1 includes a dielectric slab 120 which comprises a free-space region having two curved, preferably circular, boundaries 1*a* and 1*b.* Power transfer in star coupler 1 is accomplished through radiation in the dielectric slab 120 between its input port 101 and its output ports. Star coupler 2 includes a dielectric slab 220 which comprises a free-space region having two curved, preferably circular, boundaries 2*a* and 2*b*. Power transfer in star coupler 2 is accomplished through radiation in the dielectric slab 220 between its input and output ports. The waveguides of grating 250 are uniformly distributed along boundary 2*a* of star coupler 2, and are radially directed toward a focal point that approximately resides on boundary *2b.* Similar to star coupler 1, star coupler 2 comprises a slab of dielectric material 220 forming a free-space region having two curved, preferably circular, boundaries 2*a* and 2*b*. Output ports 201-216 are connected to the free-space region 220 in a substantially uniform distribution along the boundary 2*b*.

FIG. 2 shows a router (WGR 300) that performs a multiplexing function in the left-to-right direction of signal propagation. A plurality of optical channels, whose central wavelengths (λ₁, λ₂, ··· λ₁₆) are individually present on the input ports 301-316 of star coupler 3, which is connected to star coupler 4 via a plurality of unequal-length waveguides 350. These waveguides 350 form a diffraction grating that cause the individual input channels, which are individually present on the various input ports 301-316, to all be focused on output port 401. As discussed above, each star coupler 3, 4 respectively comprises a dielectric slab 320, 420 having input and output waveguides positioned along its opposite boundaries 3*a*, 3*b* and 4*a*, 4*b*.

WGRs 200 and 300, shown in FIGS. 1 and 2 respectively, are substantially similar but, for the sake of clarity throughout the specification, have different numeral designations because they perform different functions. Moreover, design variations are contemplated that enhance operation as a multiplexer or as a demultiplexer. And although these WGRs are, illustratively, 16-channel devices, it is understood that a greater or lesser number of channels are also contemplated by the present invention.

### B. 2x2 Optical Switch

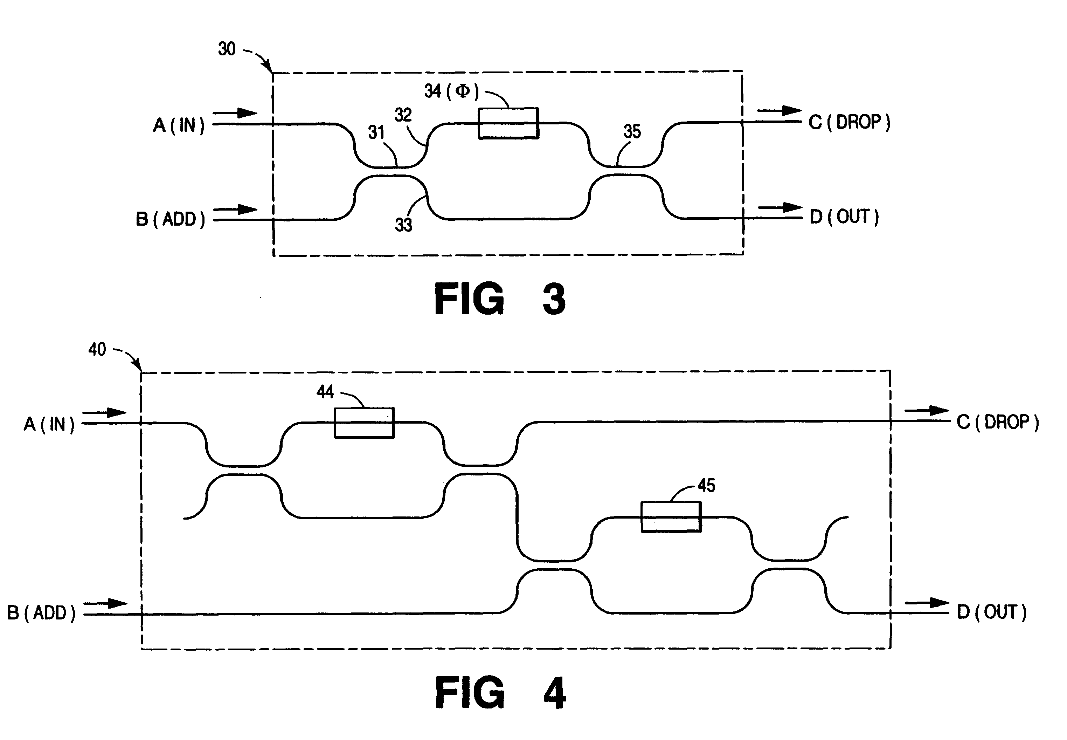

Referring to the drawings, FIG. 3 schematically illustrates a 2x2-optical switch 30 comprising a pair of 3 dB directional couplers 31, 35 connected by a pair of waveguide arms 32, 33. This switch is also referred to as a thermo-optic, Mach-Zehnder interferometer. Arm 32 comprises an optical waveguide that includes a heating element 34, which controls its optical path length (and hence the phase shift). Arm 32 provides a phase shift (φ) compared with unheated arm 33. Illustratively, in the absence of power, arm 32 and 33 have equal lengths. During normal operation, thermo-optic switch 30 controls which path input light will take. In the absence of power, φ = 0 and optical signals on port A are directed to port D, and optical signals on port B are directed to port C. This is referred to as the *cross* state of switch 30. If sufficient power (about 0.5 watts) is applied to heating element 34, then the length of arm 32 is increased by λ/2, where λ is the operating wavelength (illustratively, about 1550 nm). This is referred to as the *bar* state of switch 30 where signals on port A are directed to port C, and optical signals on port B are directed to port D. And while the present invention utilizes a thermo-optic switch, other switching techniques are disclosed in U.S. Patent 5,502,781.

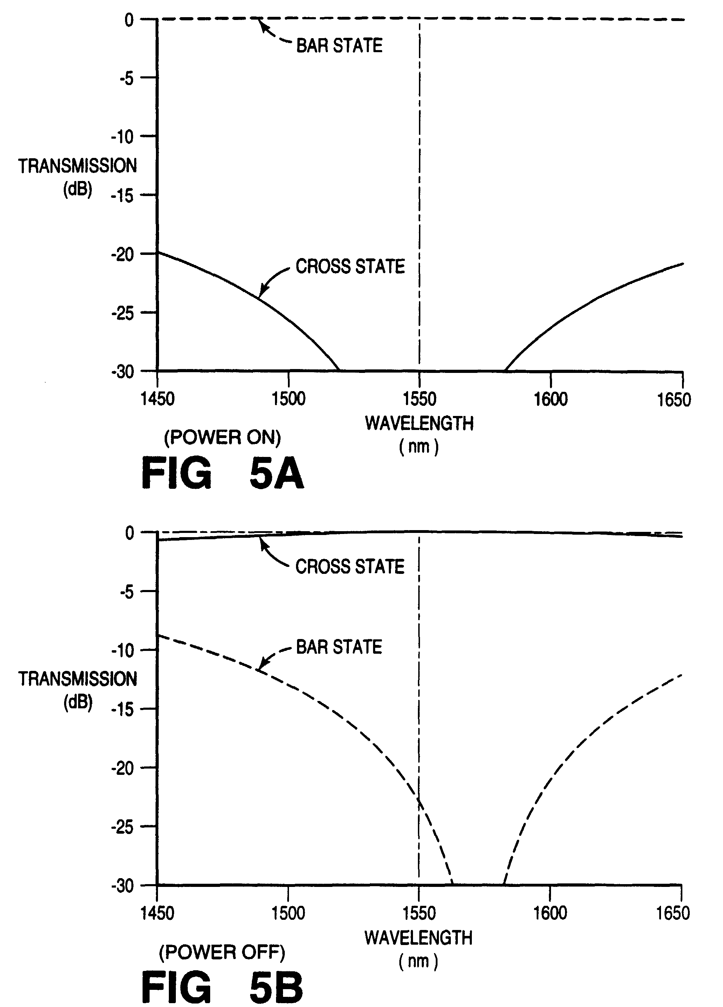

Referring briefly to FIGS. 5A and 5B, the transmission characteristics of optical switch 30 are respectively shown for its powered and non-powered states. Switch 30 desirably introduces more than 30 dB of insertion loss in the path of an optical signal whose transmission is to be attenuated; but little or no insertion loss in the path of an optical signal whose transmission is to be enabled. When power is applied to heater 34 of optical switch 30, transmission in the *bar* state is enabled, whereas transmission in the *cross* state is attenuated. FIG. 5A shows that this result is substantially achieved in the wavelength region centered at about 1550 nm. When power is removed from heater 34 of optical switch 30, transmission in the *cross* state is enabled, whereas transmission in the *bar* state is attenuated. FIG. 5B shows that this result is substantially achieved in the wavelength region centered at about 1570 nm.

FIG. 4 discloses another optical switch 40, which provides more filtering than optical switch 30, for use in situations where extremely low crosstalk is desired. Switch 40 is also suitable for use in the present invention for adding and dropping optical channels. Switch 40 comprises two stages of filtering, and the transmission characteristic of each stage is shown in FIG. 5A when power is applied to heating elements 44 and 45, or is shown in FIG. 5B when power is removed from heating elements 44 and 45. When power is removed, the two stages pass signals with an insertion loss of about 0.1 dB, in the absence of waveguide losses. When power is applied, the first stage directs optical signals from port A to port C; and the second stage directs optical signals from port B to port D. Each stage attenuates the input by more than 30 dB to prevent mixing of the dropped signal with the added signal over a spectral width of 60 nm. Using medium A waveguides *(i.e.,* Δ ≈ 0.6) with propagation loss of 0.03 dB/cm and an end loss of 0.7 dB, an estimated insertion loss of about 0.9 dB can be achieved. Power need only be applied to the switches that are set to drop and add signals. No power is needed for the pass-through channels *(i.e.,* those channels that traverse switch 40 from port A to port D). Optical switch 40 requires about 1.0 watt of power to operate, and switching time is estimated to be in the order of 10-20 milliseconds.

### C. Add-Drop Multiplexer

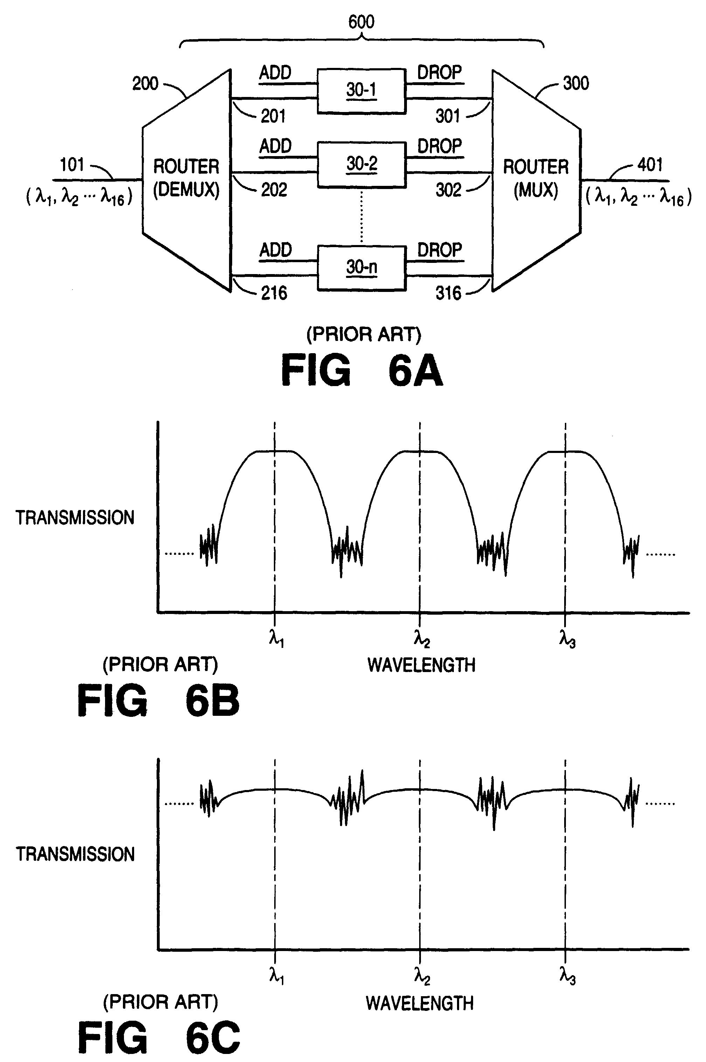

FIG. 6A shows a prior-art, add-drop multiplexer (ADM) 600 that services sixteen channels operating at different nominal wavelengths (λ₁, ..., λ₁₆). These channels are immediately adjacent to each other with a spacing of, for example, 0.8 nm. These channels illustratively reside in the 1550 nm range. Router (demux) 200 separates a multiplexed optical signal that is present on input waveguide 101 into its component channels and makes them available on output ports 201-216; whereas router (mux) 300 combines input channels on ports 301-316 into a composite output signal for transmission on waveguide 401.

2x2 switches 30-1 through 30-*n* are interconnected between each of the optical paths that extend between the demultiplexer 200 and the multiplexer 300. (The present invention is specifically concerned with the lengths of these paths. Indeed, the present inventors are the first to recognize the substantial benefits of making these paths coherent, irrespective of whether a switch is included in the path; but this will be discussed later in the specification.) As discussed in connection with FIG. 3, switches 30-1 through 30-*n* enable the transmission of one or the other of its input signals to its output port. Illustratively, when no power is applied to switch 30-1, optical signals present on output port 201 of the demultiplexer 200 are directed to input port 301 of the multiplexer 300. In this situation, the channel on output port 201 is referred to as a "pass-through" channel. And when power is applied to switch 30-1, optical signals present on output port 201 of the demultiplexer 200 are directed to the "drop" output of switch 30-1; whereas optical signals present on the "add" input of switch 30-1 are directed to input port 301 of the multiplexer 300. It is noted that the wavelength range of the added channel is the same as the wavelength range of the dropped channel. *(e.g.,* routers 200, 300 are designed to accommodate a small range of wavelengths, centered around λ₁, between ports 201 and 301.) Accordingly, ADM 600 functions to add or remove individual channels from an optical transmission path.

FIG. 6B shows the transmission characteristic of pass-through channels associated with the prior-art ADM of FIG. 6A in order to illustrate passband narrowing that occurs when adjacent-channel crosstalk is designed to be low. Sharp variations in transmission gain ("multi-path spikes") are caused by phase delays and polarization changes experienced by lightwaves propagating over different paths to a common end point. So that these spikes do not adversely affect the overall transmission characteristic, designers have deliberately narrowed the passband in order to minimize the effect of transmission gain spikes at the band edges. Such passband narrowing is clearly undesirable because it decreases system efficiency and/or performance, particularly when ADMs are cascaded in long optical networks.

FIG. 6C shows the transmission characteristic of pass-through channels associated with the ADM of FIG. 6A in order to illustrate multi-path spikes that occur when adjacent-channel crosstalk is permitted to be high. In this situation, designers have chosen to avoid narrowing the passbands; however, this comes with the consequence of a transmission characteristic that includes sharp variations in amplitude in the region between channels. This, too, is clearly undesirable because of the distortion it imparts on optical signals propagating through an optical transmission network.

### II. Routers Having Coherent Connecting Paths

Connecting paths between a multiplexer and a demultiplexer pair in ordinary implementations are not coherent, meaning that the phase delay or polarization change are different and uncontrolled for different paths. This is unavoidable if the multiplexer, demultiplexer and connecting paths are separate pieces. The non-coherent connecting paths cause unpredictable multi-path interference because of passband overlap and non-ideal crosstalk. As a result, even if one ignores the adjacent-channel crosstalk requirement of the demultiplexer and cascades two wide-passband routers, the cascaded passband of the pair still will not have a wide flat region because of the oscillating ripples generated by the multi-path interference as shown in FIG. 6C.

Multi-path interference can be controlled by making the connecting paths coherent, *i.e.,* paths that preserve polarization and have the same phase delay. It is possible to provide the same phase delay among the different connecting paths by making their lengths equal to each other ± *nλ*_{*s*} *--* where *n* is an integer and λ_{*s*} is the average wavelength carried by the *s*^{*th*} connecting path.. With coherent connecting paths, one can construct a demultiplexer-multiplexer pair having a combined wavelength response that is virtually flat over a large wavelength window covering all of the WDM channels. With planar waveguide technology, one can integrate the multiplexer, demultiplexer, and connecting paths with switches and the like on the same substrate. This is important because coherent connecting paths require precise control of path length, which is not readily achievable if the optical components are located on multiple substrates. Accordingly, in preferred embodiments of the present invention, all of the components reside on the same substrate.

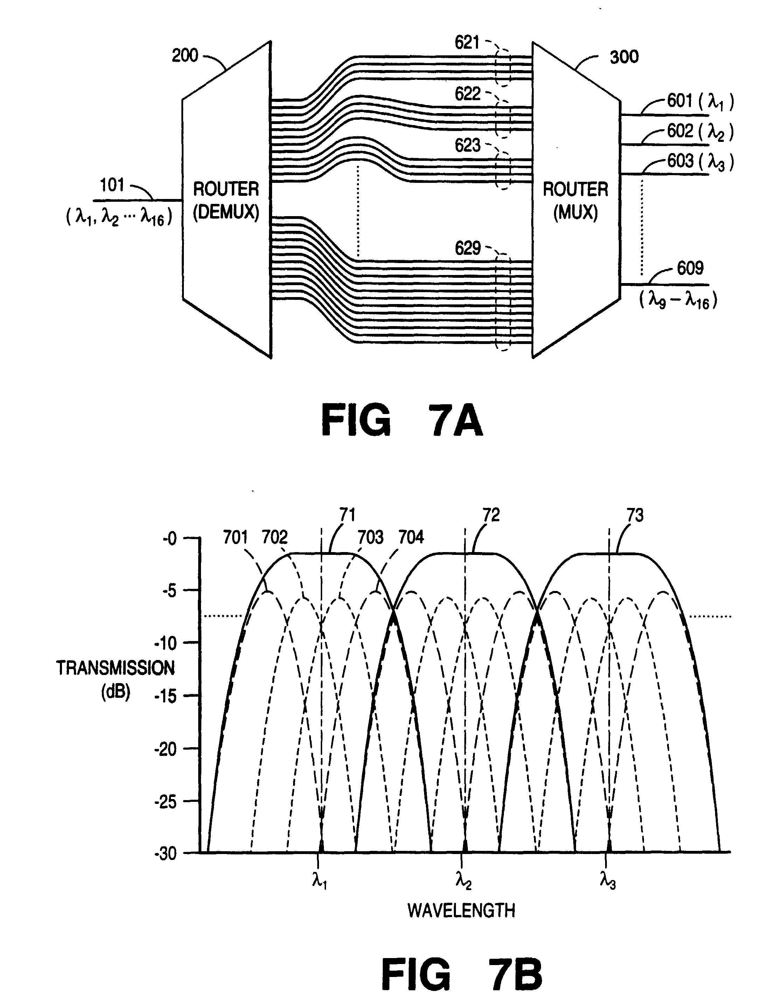

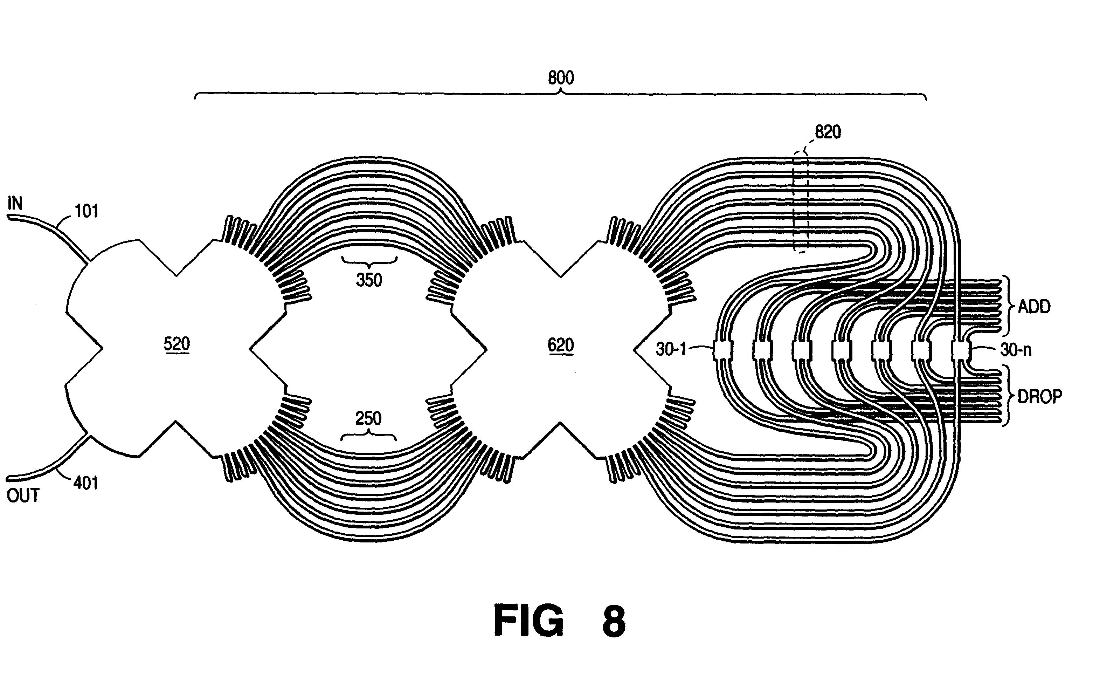

Reference is now made to FIG. 7A to illustrate that desirable passband shapes can be achieved when some or all of the paths interconnecting a demultiplexer and a multiplexer are coherent. FIG. 7A shows an example of a router pair configured as a 1xN WDM. Routers 200, 300 are depicted as trapezoid shapes, but the actual layout of the device can be similar to that shown in FIG. 8. Note that router 300 is shown in FIG. 7A having multiple output ports 601-609; nevertheless, its construction is otherwise the same as the router 300 shown in FIG. 2. Here, Gaussian passbands are combined coherently to produce a transmission characteristic without multi-path spikes as shown in the simulation results of FIG. 7B. For example, curve 71 shows the end-to end transmission characteristic *(i.e.,* between input waveguide 101 and output waveguide 601) associated with the waveguides in group 621. Note that waveguide group 621 comprises four waveguides, all having the same length. Each of these waveguides has a substantially rectangular cross-section shape. It is noted that waveguides having non-circular cross-section shapes, and circular waveguides having anisotropic stress are effective to preserve polarization. Curve 71 is the composite characteristic of four Gaussian passbands 701, 702, 703, 704. Similarly, curves 72 and 73 are the composite characteristics of four Gaussian passbands resulting from coherent waveguide groups 622, 623. It is finally noted that wider passbands are easily constructed by combining larger groups of waveguides such as 629 where thirty-two Gaussian passbands are coherently connected to provide a relatively wide overall passband. Appropriate gaps are introduced between different connecting-path groups at the input of the mux router 300, so that the combined power of each group appear at a different output port (owing to the routing property of the waveguide grating router). There is no intrinsic insertion loss in this device, and the insertion loss of a fabricated device is limited by the loss of the routers themselves.

It is noted that Gaussian passbands combine to create a "maximally flat" shape when the wavelength separation between adjacent passbands is equal to their bandwidth (measured between wavelengths where the power is 3 dB below the power at the central wavelength of the passband). In this situation, a normalized separation, S, between the central wavelengths of adjacent passbands is defined to be 1.00. Referring again to FIG. 7B, the normalized separation, S, between the central wavelengths of Gaussian passbands 701, 702, 703, 704 is designed to be 1.00.

By way of comparison, the flat passbands of the WDMs used in the industry today are made by combining two Gaussian passbands with a Y-branch coupler or some equivalent method. The Y-branch coupler introduces 3 dB of intrinsic loss, resulting in a total device loss of more than 4 dB. To further widen the passband, more Gaussian passbands must be combined, which is accompanied by higher loss. Accordingly, the present invention provides wide flat passbands in a WDM without intrinsic loss!

### III. Add-Drop Multiplexers Having Coherent Connecting Paths

FIG. 8 illustrates a planar layout of an add-drop multiplexer 800, which includes a pair of routers having coherent connecting paths 820. Two routers cross each other at common free-space regions 520, 620 without interfering with each other optically. Each router includes a plurality of unequal-length waveguides 250, 350 that interconnect its free-space regions. Most importantly, the interconnecting paths 820 are shaped to have optically equal path lengths that preserve polarization. Thermo-optic switches 30-1 through 30-*n* are positioned in the middle of these coherent connecting paths 820. In overall operation, ADM 800 is substantially similar to the operation of ADM 600 shown in FIG. 6 and discussed above. However, ADM 800 represents a substantial improvement over ADM 600 by the inclusion of coherent connecting paths 820. The improvement is most evident in connection with the pass-through channels of ADM 800. Specifically, the pass-through channels suffer no intrinsic insertion loss or narrowing of their passbands. In FIG. 8, the pass-through channels comprise those channels that travel through non-powered optical switches.

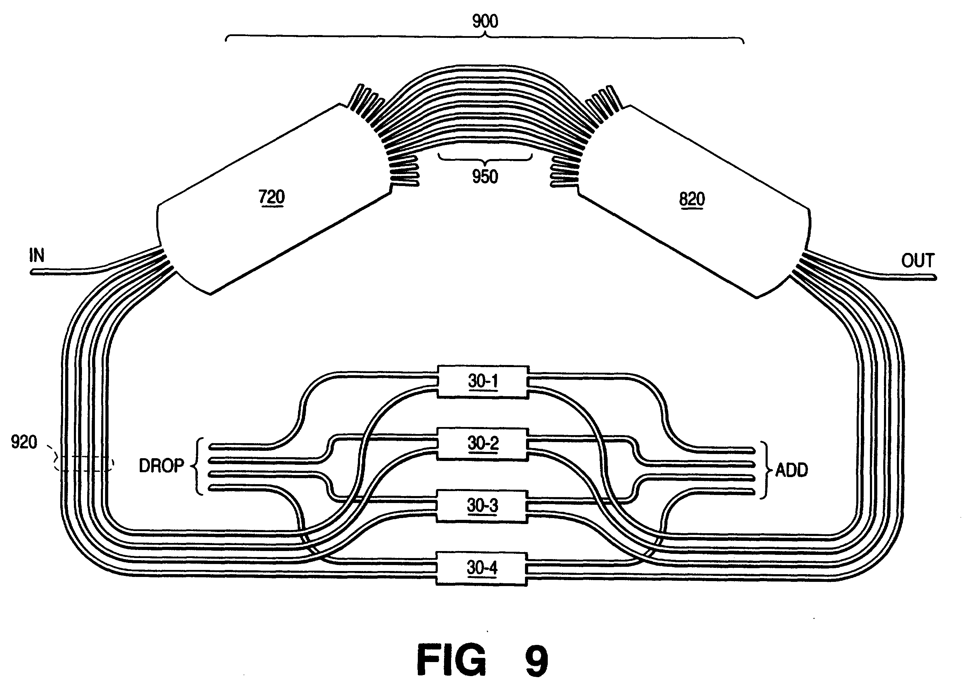

FIG. 9 discloses a single router, which is configured to operate as a pair of routers, including several optical switches to form an add-drop multiplexer 900 in accordance with the invention. Optical signals entering dielectric slab 720 at the IN port experience demultiplexing as they propagate through dielectric slab 720, grating 950, and emerge on multiple output ports of dielectric slab 820. The demultiplexed signals then travel along coherent connecting paths 920 through a number of 2x2 optical switches (illustratively, 30-1, 30-2, 30-3, 30-4). These switches operate in the manner described in connection with FIG. 3 to add/drop individual channels to/from an optical transmission path. These optical signals, on connecting paths 920, are looped back to various input ports of dielectric slab 720 where, because of their positioning, they are multiplexed as they propagate through dielectric slab 720, grating 950, and emerge at the OUT port of dielectric slab 820.

Although various particular embodiments of the present invention have been shown and described, modifications are possible within the scope of the invention. These modifications include, but are not limited to: the use of optical multiplexer and demultiplexer designs other than waveguide grating routers; and the use of optical devices other than switches in the coherent connecting paths to perform different functions.

## Claims

1. Apparatus [600, 800, 900] comprising an optical multiplexer [300] and an optical demultiplexer [200] connected in series, the demultiplexer including an input port [101] and a plurality of output ports [201-216], the multiplexer having a plurality of input ports [301-316] and an output port [401],
CHARACTERIZED BY
a plurality of coherent connecting paths [201/301 and 202/302] interconnecting the output ports of the demultiplexer with the input ports of the multiplexer.

2. The apparatus [600] of claim 1, wherein said coherent connecting paths [201/301 and 202/302] comprise optical waveguides having the same phase delay, and wherein each waveguide is arranged to preserve the polarization of light traveling along its length.

3. The apparatus [600] of claim 2, wherein the path lengths are equal to each other ± *nλ*_{*s*}*,* where *n* is an integer and λ_{*s*} is the average wavelength carried by the *s*^{*th*} connecting path.

4. The apparatus [600] of claim 1, wherein the optical multiplexer [300], the optical demultiplexer [200], and the coherent connecting paths [201/301 and 202/302] reside on a single substrate.

5. The apparatus [600] of claim 3, wherein λ_{*s*} is equal to 1550 ± 50 nanometers.

6. The apparatus [600] of claim 2, wherein the optical waveguides [201/301 and 202/302] have rectangular cross sections to preserve the polarization of light traveling along their lengths.

7. The apparatus [600] of claim 1 wherein at least one of the coherent connecting paths [201/301] includes a 2x2 optical switch [30-1].

8. The apparatus [600] of claim 1, wherein the optical multiplexer [300] includes a pair of dielectric slabs [320, 420] that are interconnected by a waveguide grating [350] that comprises an array of unequal-length waveguides.

9. The apparatus [600] of claim 1, wherein the optical demultiplexer [200] comprises a pair of dielectric slabs [120, 220] that are interconnected by a waveguide grating [250] that comprises an array of unequal-length waveguides.

10. The apparatus [800] of claim 1 wherein the demultiplexer and the multiplexer each comprise a pair of dielectric slabs [520, 620] interconnected by an array of unequal-length waveguides [250, 350], and wherein the multiplexer and demultiplexer share the same pair of dielectric slabs.

11. The apparatus of claim 1, wherein the transmission characteristic [71] between the input port [101] of the demultiplexer [200] and its output ports [621] have Gaussian shapes [701-704], wherein adjacent Gaussian shapes [701, 702] are arranged to intersect at their -3 dB wavelengths.

12. The apparatus of claim 11, wherein the transmission characteristic [71] between input ports [621] of the multiplexer [300] and its output port [601] have Gaussian shapes [701-704], wherein adjacent Gaussian shapes [701, 702] are arranged to intersect at their -3 dB wavelengths.
